# FASCICULE DE BREVET EUROPEEN

(11) **EP 3 271 093 B1**
(45) Date de publication et mention de la délivrance du brevet: **03.04.2019**
(21) Numéro de dépôt: 16707912.8
(22) Date de dépôt: 12.02.2016
(51) Int. Cl.: B21D 24/16, B23D 31/00, B21D 28/02, B21D 53/88

(54) **OUTILLAGE DE DETOURAGE D'EMBOUTIS**
WERKZEUG ZUM BESCHNEIDEN VON PRESSTEILEN
TOOL FOR TRIMMING PRESS-FORMED PARTS

(30) Priorité: 19.03.2015 FR 1552257
(43) Date de publication de la demande: 24.01.2018
(73) Titulaire: PSA AUTOMOBILES S.A., 78300 Poissy (FR)
(72) Inventeur: CROGUENNEC, Martine, 78180 Montigny Le Bretonneux (FR); PANNAUX, Jean Marc, 91220 Bretigny-Sur-Orge (FR)
(86) Numéro de dépôt international: PCT/FR2016/050325
(87) Numéro de publication internationale: WO 2016/146906

(56) Documents cités:
- FR-A1- 2 943 563
- JP-A- 2012 196 714
- JP-A- 2013 027 889
- US-A1- 2009 151 417

## Description

L'invention a trait au domaine du détourage d'emboutis, notamment de carrosserie de véhicule automobile. Plus particulièrement l'invention a trait à un outillage de détourage d'un embouti selon le préambule de la revendication 1 et à un procédé de détourage d'emboutis selon le préambule de la revendication 9.

Un tel outillage et un tel procédé sont par exemple décrits dans le document JP-A-2013027889.

La fabrication d'un embouti, notamment de carrosserie de véhicule automobile, comprend la mise à forme de l'embouti jusqu'à l'obtention d'un embouti dit « brut ». Un tel embouti brut comprend encore des bords correspondant aux flans qui ont été nécessaires pour le serrage de l'embouti lors de la mise à forme ou bien pour le transfert de l'embouti entre deux postes de mise à forme ou bien encore pour la manipulation de l'embouti lors d'un stockage. La phase de mise à forme de l'embouti est généralement suivie d'une découpe, ou « détourage », des bords de l'embouti pour obtenir un embouti dit « fini ».

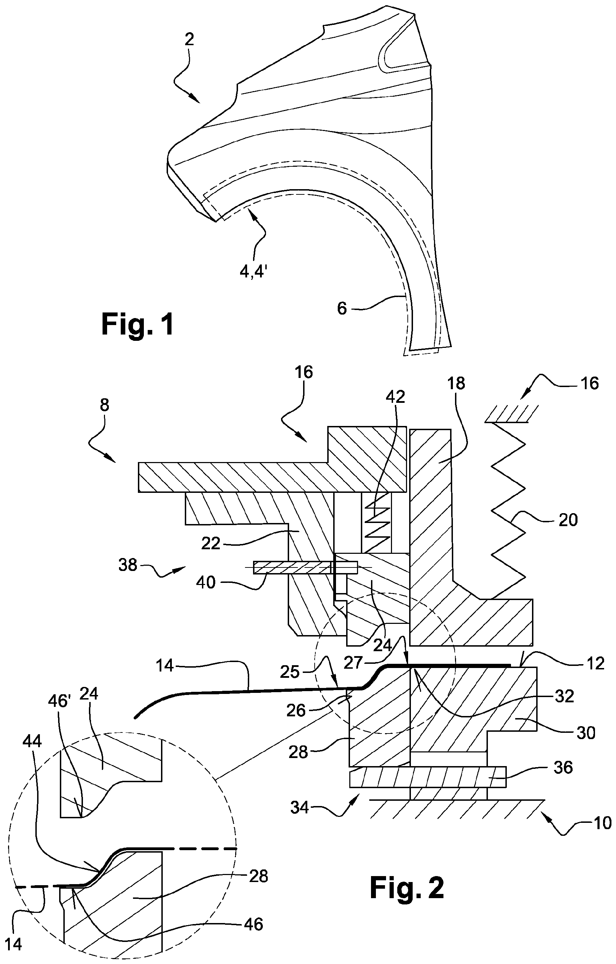

La figure 1 est une vue d'un embouti 2 de carrosserie de véhicule automobile, en l'occurrence un passage de roue. Le bord 4 de l'embouti formant le passage de roue est arrondi et destiné à contourner la roue d'un véhicule. Selon les modèles de véhicules, un tel bord de passage de roue peut être réalisé dans différentes finitions, par exemple une finition dans laquelle la tôle de l'embouti forme le bord de passage lui-même, ou bien une autre finition dans laquelle le bord 4' peut être surmonté par un enjoliveur 6 (représenté en traits interrompus). Dans le premier cas ici présenté, le bord 4 de l'embouti « brut » est détouré puis généralement rabattu pour réaliser l'embouti « fini ». Dans le cas de la réalisation du passage de roue avec un enjoliveur 6, le détourage de l'embouti 2 est généralement réalisé de manière particulière, par exemple selon un profil particulier pour le montage de l'enjoliveur. La phase de finition de passages de roue pour des modèles de véhicule différents peut donc comprendre des passes de détourage selon des profils de découpe différents. Une telle phase de finition de passages de roue requiert généralement l'usage de plusieurs presses d'emboutissage, chacune étant équipée d'un outillage de détourage spécifique pour une réalisation spécifique du passage de roue ; cette phase de finition est par conséquent onéreuse.

Le document de brevet FR 2 943 563 A1 divulgue un outillage de presse pour le détourage d'un bord d'embouti et le relevage dudit bord. L'outillage comprend un bâti inférieur recevant l'embouti, un bâti supérieur mobile par rapprochement du bâti inférieur pour presser ledit bord d'embouti, un outil de détourage fixe sur le bâti supérieur et apte à coopérer avec une contre lame du bâti inférieur pour cisailler le bord d'embouti. L'outillage comprend, en outre, un outil de relevage du bord détouré, ledit outil étant solidaire du bâti inférieur et directement adjacent à la contre lame. L'outil de relevage est apte à coopérer avec le bâti supérieur, dans le rapprochement supplémentaire des bâtis inférieur et supérieur après le détourage, pour relever le bord d'embouti. Cet enseignement est intéressant en ce que le détourage et le relevage sont réalisés dans la même passe de presse de mise à forme. Il se limite cependant à un détourage selon un unique profil de découpe.

L'invention a pour objectif de proposer une solution palliant au moins un désavantage de l'état de l'art, en particulier de l'état de l'art susmentionné. Plus particulièrement l'invention a pour objectif de proposer une solution d'outillage pour réaliser le détourage de deux emboutis selon des profils de détourage différents et qui soit économique.

L'invention a pour objet un outillage de détourage d'un embouti, notamment de carrosserie de véhicule automobile, ledit outillage comprenant : un premier bâti avec une surface de soutien de l'embouti, ladite surface comprenant une première arête de découpe ; un deuxième bâti avec un presseur coulissant apte à presser l'embouti contre la surface de soutien, et une première lame de découpe fixe par rapport audit bâti et apte à coopérer avec la première arête de découpe; remarquable en ce que la surface de soutien est formée par un support et une lame mobile comprenant la première arête de découpe, ladite lame étant mobile le long dudit support qui comprend une deuxième arête de découpe, le déplacement de ladite lame permettant de découvrir ladite deuxième arête de découpe ; le deuxième bâti comprend une deuxième lame de découpe coulissant entre la première lame et le presseur, et apte à coopérer avec la deuxième arête de découpe. La deuxième lame peut jouer le rôle de presseur, elle peut, par ailleurs, être bloquée au deuxième bâti par un vérin ou bien par des moyens de verrouillage.

Les bâtis supérieur et inférieur sont mobiles l'un par rapport à l'autre. Avantageusement, le premier bâti est un bâti inférieur et le deuxième bâti est un bâti supérieur.

Selon un mode avantageux de l'invention, l'outillage de détourage comprend des moyens de verrouillage de la deuxième lame de découpe dans une position sortie par rapport à la première lame de découpe en vue de coopérer avec la deuxième arête de découpe.

Selon un mode avantageux de l'invention, le deuxième bâti comprend des moyens élastiques exerçant un effort élastique sur la deuxième lame de découpe tendant à la déplacer vers la position sortie par rapport à la première lame de découpe.

Avantageusement, les moyens élastiques comprennent un ou plusieurs ressorts hélicoïdaux.

Selon un mode avantageux de l'invention, les moyens de verrouillage du deuxième bâti sont configurés pour assurer une liaison mécanique, préférentiellement directe, entre les première et deuxième lames de découpe, lesdits moyens préférentiellement comprenant une broche mobile dans une direction perpendiculaire à celle du coulissement de la deuxième lame de découpe.

Selon un mode avantageux de l'invention, les moyens de verrouillage comprennent une broche coulissante dans la première lame et apte à coulisser horizontalement dans la deuxième lame de découpe.

Selon un mode avantageux de l'invention, le premier bâti comprend des moyens d'indexage de la lame mobile dans une position d'alignement avec la deuxième arête de découpe sur le support, de manière à ce que la première lame de découpe puisse coopérer avec la première arête de découpe.

Selon un mode avantageux de l'invention, le premier bâti est configuré pour que la lame mobile soit en retrait dans une direction opposée au deuxième bâti lorsque les moyens d'indexage dudit premier bâti sont inactifs.

Selon un mode avantageux de l'invention, les moyens d'indexage comprennent une cale mobile, la lame mobile étant, par indexage, en appui contre ladite cale mobile, cette dernière étant en retrait dans le bâti lorsque lesdits moyens sont inactifs.

Selon un mode avantageux de l'invention, la lame mobile du premier bâti et la deuxième lame de découpe présentent des surfaces de contact avec l'embouti qui s'épousent.

Selon un mode avantageux de l'invention, la lame mobile du premier bâti et la deuxième lame de découpe sont alignées de manière à contacter une même portion de l'embouti.

Avantageusement, au moins une partie des surfaces de contact de la lame mobile du premier bâti et de la deuxième lame de découpe sont aptes à presser l'embouti lors de la découpe de l'embouti entre la première lame de découpe et la première arête de découpe.

L'invention a également pour objet un procédé de détourage d'embouti suivant, de manière sélective, un premier et un deuxième profil de détourage, ledit procédé comprenant l'utilisation d'une presse d'emboutissage équipée d'un outillage de détourage ; remarquable en ce que l'outillage de détourage est conforme à l'invention ; et par les étapes suivantes : mise place d'un embouti dans l'outillage de détourage ; et, de manière sélective, découpe de l'embouti au moyen de la première lame de détourage et de la première arête de découpe de manière à former le premier profil de détourage ; ou découpe de l'embouti au moyen de la deuxième lame de détourage et de la deuxième arête de découpe de manière à former le deuxième profil de détourage.

Selon un mode avantageux de l'invention, la lame mobile du premier bâti est indexée dans une position d'alignement avec la deuxième arête de découpe sur le support avant de réaliser l'étape de découpe de l'embouti suivant le premier profil ; et la deuxième lame de découpe est verrouillée dans une position sortie par rapport à la première lame de découpe avant de réaliser l'étape de découpe de l'embouti suivant le deuxième profil. La mise à disposition de l'outillage pour réaliser le détourage des premier et deuxième profiles se réalise lorsque l'outillage est au repos en position ouverte.

Avantageusement, la deuxième lame de découpe est libre de se déplacer vers une position de retrait par rappport à la première lame de détourage avant l'opération de découpe suivant le premier profil.

Avantageusement, la lame mobile est en position de retrait par rapport au support avant de réaliser l'étape de découpe suviant le deuxième profil.

Les mesures de l'invention sont intéressantes en ce que l'outillage conforme à l'invention facilite le détourage d'emboutis « brut » pour lesquels les phases de finition se font selon des profils de détourage différents. En effet, la phase de détourage d'emboutis destinés à être détourés selon deux profils différents peut être réalisée en utilisant une unique presse sur laquelle est monté un outillage de détourage conforme à l'invention. La phase de détourage d'emboutis selon deux profils différents et réalisée sur une seule presse de détourage est par ailleurs plus économique.

D'autres caractéristiques et avantages de la présente invention seront mieux compris à l'aide de la description et des dessins parmi lesquels :
- La figure 1 est une vue en perspective d'un embouti de carrosserie de véhicule automobile ;
- La figure 2 est une vue en coupe d'un outillage de détourage conforme à l'invention, ledit outillage étant en position ouverte ;
- La figure 3 est une vue en coupe de l'outillage de détourage de la figure 2 configuré pour le détourage selon un premier profil de l'embouti de la figure 1, ledit outillage étant en position fermée ;
- La figure 4 est une vue en coupe de l'outillage de détourage de la figure 2 configuré pour le détourage selon un deuxième profil de l'embouti de la figure 1, ledit outillage étant en position fermée ;

La figure 1 est une vue en perspective d'un embouti de carrosserie de véhicule automobile décrit dans la discussion de l'état de l'art.

La figure 2 est une vue en coupe d'un outillage de détourage 8 conforme à l'invention. L'outillage 8 comprend un premier bâti 10 en l'occurrence un bâti inférieur avec une surface de support 12 sur laquelle est posé un embouti 14 en vue de son détourage. L'outillage 8 comprend, en outre, un deuxième bâti 16 mobile par rapport au premier bâti 10. Le deuxième bâti 16, en l'occurrence le bâti supérieur comprend un presseur 18 coulissant et monté sur ressort 20 et apte à presser l'embouti 14 sur la surface de soutien 12, ainsi que deux lames de découpe 22 et 24 disposées l'une à côté de l'autre, la première lame 22 étant disposée à l'opposé (à gauche sur l'image) du bâti 16 par rapport au presseur 18, la deuxième lame 24 étant coulissante entre la première lame 22 et le presseur 18. L'outillage 8 en question est représenté en position ouverte.

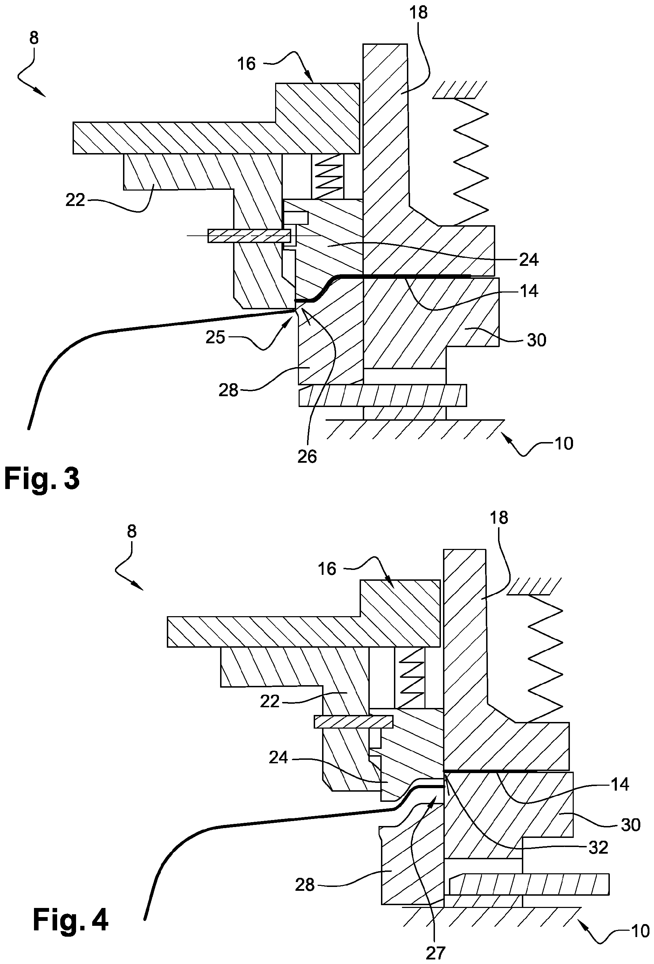

Un procédé conforme à l'invention comprend l'utilisation d'une presse d'emboutissage (non représentée) équipée d'un tel outillage 8 conforme à l'invention ; le procédé consiste, une fois l'embouti 14 mis en place dans l'outillage 8, en un détourage de l'embouti selon un premier 25 ou bien un deuxième profil 27 de découpe. Le détourage choisi dépend de la disposition de l'outillage 8 pour soit, faire travailler un premier couple de lame - arête de découpe, qui correspond à une première disposition de l'outillage décrite en relation avec la figure 3, soit faire travailler un deuxième couple de lame - arête de découpe, qui correspond à une deuxième disposition de l'outillage décrite en relation avec la figure 4, l'outillage 8 étant configuré pour passer d'une des dispositions à l'autre en position ouverte de l'outillage lorsque l'outillage est au repos.

La surface de soutien 12 du bâti inférieur 10 forme une première arête de découpe 26 qui est apte à coopérer avec la première lame de découpe 22 du bâti supérieur 16, cette dernière étant fixe par rapport au bâti supérieur. Plus précisément, la première arête 26 est réalisée sur une lame mobile 28 (à gauche du bâti inférieur), la surface de soutien 12 du bâti inférieur 10 étant formée par cette lame mobile 28 ainsi qu'un support 30 (à droite sur l'image). Le support 30, outre la portion de soutien de l'embouti 14 comprend une deuxième arête de découpe 32, celle-ci n'est cependant par découverte sur l'image. Le bâti inférieur 10 comprend des moyens d'indexage 34 de la lame mobile 28 ; par indexage on entend que la lame mobile 28 est en position d'alignement avec la deuxième arête de découpe 32 sur le support 30, de manière à ce que la première lame de découpe 22 puisse coopérer avec la première arête de découpe 26. Les moyens d'indexage comprennent sur le bâti inférieur 10 une cale mobile 36, la lame mobile 28 étant par indexage en appui contre la cale 36. Lorsque les moyens d'indexage 34 sont inactifs, la lame mobile 28 peut se déplacer le long du support 30, ce déplacement permettant de découvrir la deuxième arête de découpe 32 du support.

La deuxième lame 24 du bâti supérieur 16, celle située entre la première lame 22 et le presseur 18, est apte à coopérer avec la deuxième arête 32 réalisée dans le support 30 du bâti inférieur 16 de manière à réaliser le détourage de l'embouti 14 selon le deuxième profil 27. L'outillage de détourage 8 comprend, en outre, des moyens de verrouillage 38 de la deuxième lame 24 avec la première lame 22, ces moyens de verrouillage 38 étant configurés pour assurer une liaison mécanique entre les première et deuxième lames de découpe 22 et 24. Les moyens de verrouillage 38 comprennent en l'occurrence une broche 40 mobile dans une direction perpendiculaire à celle du coulissement de la deuxième lame de découpe 24. Dans le mode de réalisation présenté, la broche mobile 40 lie directement la deuxième lame 24 à partir de la première lame 22 qui est fixe sur le bâti supérieur 16, la broche 40 est plus précisément coulissante dans la première lame 22 et, par verrouillage, apte à coulisser horizontalement dans la deuxième lame 24. L'outillage 8 peut être disposé ; soit à bloquer, en position de verrouillage de la deuxième lame 24, tout mouvement de coulissement de la deuxième lame 24 par rapport au bâti supérieur 16 de manière à ce que la deuxième lame 24 puisse, en coopérant avec la deuxième arête 32, réaliser le détourage de l'embouti 14 ; soit à libérer, en position de déverrouillage de la deuxième lame 24, le mouvement de coulissement de la deuxième lame 24 par rapport à la première lame 22. On peut observer sur l'image que le bâti supérieur 16 comprend, en outre, un ressort 42 monté au bâti supérieur 16, ledit ressort exerçant un effort élastique sur la deuxième lame de découpe 24 tendant à l'écarter du bâti supérieur 16. Le ressort 42 tend en fait à déplacer la deuxième lame 24 vers une position « sortie » par rapport à la première lame de découpe 22, position « sortie » dans laquelle la deuxième lame 24 peut être verrouillée. Par position « sortie », on entend que lors du rapprochement des bâtis supérieur et inférieur 16 et 10 pour le détourage de l'embouti, la deuxième lame 24 est plus rapidement en contact avec l'embouti 14 que ne l'est la première lame 22. Lorsque la deuxième lame 24 est effectivement verrouillée, elle est « sortie » par rapport à la première lame 22 et apte à effectuer la découpe de l'embouti 14.

Par ailleurs, la lame mobile 28 du bâti inférieur 10 et la deuxième lame de découpe 24 sont alignées de manière à contacter une même portion 44 de l'embouti visible sur la portion agrandie de l'image. Dans un mode particulier de l'invention, la lame mobile 28 et la deuxième lame de découpe 24 peuvent présenter des surfaces de contact 46 et 46' (voir portion agrandie de l'image) avec l'embouti 14 qui s'épousent ; Dans cette configuration de l'outillage 8, la deuxième lame 24 peut alors elle-même jouer le rôle de presseur de l'embouti contre la lame mobile 28 du bâti inférieur 10, ce qui est favorable au maintien de l'embouti 14 lors du détourage de l'embouti entre la première lame 22 et la première arête 26 de la lame mobile 28. La deuxième lame de découpe 24, poussée par le ressort 42 en position « sortie » par rapport à la première lame 22, est alors apte à presser l'embouti 14 avant que la première lame 22 ne coopère avec la première arête 26, le ressort 42 de fixation de la deuxième lame 24 étant alors aptes à se comprimer lors de la découpe.

La figure 3 est une vue en coupe de l'outillage de détourage 8 conforme à l'invention et disposé pour le détourage de l'embouti 14 selon un premier profil de découpe 25. L'outillage 8 est en position fermée, le presseur 18 serrant l'embouti 14 contre le support 30. L'outillage 8 est apte à découper l'embouti 14 au moyen de la première lame 22 de détourage et de la première arête de découpe 26 de manière à former le premier profil de découpe 25. La deuxième lame de découpe 24 est favorablement libre de se déplacer vers une position de retrait par rappport à la première lame de détourage 22 et ce avant l'opération de découpe suivant le premier profil 25. Par ailleurs, l'outillage 8 peut être configuré de sorte à ce qu'au moins une partie des surfaces de contact de la lame mobile 28 du bâti inférieur et de la deuxième lame de découpe 24 avec l'embouti puissent presser l'embouti lors de la découpe de l'embouti. Enfin, pour la découpe selon le premier profil 25, l'outillage de détourage 8 est mis à disposition de sorte à ce que la lame mobile 28 du bâti inférieur est indexée dans une position d'alignement avec la deuxième arête de découpe sur le support 30. On peut voir qu'en position fermée de l'outillage, et après la découpe, la lame mobile de découpe 28 du bâti inférieur 10 est toujours indexée dans une position d'alignement avec la deuxième arête de découpe sur le support 30.

La figure 4 est une vue en coupe de l'outillage de détourage 8 conforme à l'invention et disposé pour le détourage de l'embouti 14 selon un deuxième profil de découpe 27. L'outillage 8 est en position fermée, le presseur 18 serrant l'embouti 14 contre le support 30. L'outillage 8 est apte à découper l'embouti au moyen de la deuxième lame de détourage 24 et de la deuxième arête de découpe 32 de manière à former le deuxième profil 27 de détourage. Pour la découpe de l'embouti selon le deuxième profil, l'outillage de détourage 8 est mis à disposition de sorte à ce que la deuxième lame de découpe 24 est verrouillée dans une position « sortie » par rapport à la première lame de découpe 22. On peut également observer que les moyens d'indexage sont inactifs et par conséquent la lame mobile 28 est déplacée en retrait dans une direction opposée au bâti supérieur 16. La lame mobile 28 en retrait, outre le fait qu'elle libère la deuxième arête de découpe 32, permet le déplacement supplémentaire de la deuxième lame de découpe 24 après le détourage. La lame mobile 28 est en position de retrait par rapport au support 30 avant de réaliser l'étape de découpe suivant le deuxième profil 27.

## Revendications

1. Outillage de détourage (8) d'un embouti (14), notamment de carrosserie de véhicule automobile, ledit outillage comprenant :
- un premier bâti (10) avec une surface de soutien (12) de l'embouti, ladite surface comprenant une première arête de découpe (26) ;
- un deuxième bâti (16) avec un presseur (18) coulissant apte à presser l'embouti contre la surface de soutien, et une première lame de découpe (22) fixe par rapport audit bâti et apte à coopérer avec la première arête de découpe (26),
la surface de soutien (12) étant formée par un support (30) et une lame mobile (28) comprenant la première arête de découpe (26), ladite lame étant mobile le long dudit support (30) qui comprend une deuxième arête de découpe (32),
**caractérisé en ce que**
le déplacement de ladite lame (28) permet de découvrir ladite deuxième arête de découpe (32) et **en ce que** le deuxième bâti (16) comprend une deuxième lame de découpe (24) coulissant entre la première lame (22) et le presseur (18), et apte à coopérer avec la deuxième arête de découpe (32).

2. Outillage de détourage (8) selon la revendication 1, **caractérisé en ce que** le deuxième bâti (16) comprend des moyens de verrouillage (38) de la deuxième lame de découpe (24) dans une position sortie par rapport à la première lame de découpe (22) en vue de coopérer avec la deuxième arête de découpe (32).

3. Outillage de détourage (8) selon la revendication 2, **caractérisé en ce que** le deuxième bâti (16) comprend des moyens élastiques (42) exerçant un effort élastique sur la deuxième lame de découpe (24) tendant à la déplacer vers la position sortie par rapport à la première lame de découpe (22).

4. Outillage de détourage (8) selon l'une des revendications 2 et 3, **caractérisé en ce que** les moyens de verrouillage (38) du deuxième bâti (16) sont configurés pour assurer une liaison mécanique, préférentiellement directe, entre les première (22) et deuxième (24) lames de découpe, lesdits moyens préférentiellement comprenant une broche mobile (40) dans une direction perpendiculaire à celle du coulissement de la deuxième lame de découpe (22).

5. Outillage de détourage (8) selon l'une des revendications 1 à 4, **caractérisé en ce que** le premier bâti (10) comprend des moyens d'indexage (34) de la lame mobile (28) dans une position d'alignement avec la deuxième arête de découpe (32) sur le support (30), de manière à ce que la première lame de découpe (22) puisse coopérer avec la première arête de découpe (26).

6. Outillage de détourage (8) selon la revendication 5, **caractérisé en ce que** le premier bâti (10) est configuré pour que la lame mobile (28) soit en retrait dans une direction opposée au deuxième bâti (16) lorsque les moyens d'indexage (34) dudit premier bâti sont inactifs.

7. Outillage de détourage (8) selon l'une des revendications 1 à 6, **caractérisé en ce que** la lame mobile (28) du premier bâti (10) et la deuxième lame de découpe (24) présentent des surfaces de contact (46, 46') avec l'embouti qui s'épousent.

8. Outillage de détourage (8) selon l'une des revendications 1 à 7, **caractérisé en ce que** la lame mobile (28) du premier bâti et la deuxième lame de découpe (24) sont alignées de manière à contacter une même portion (44) de l'embouti.

9. Procédé de détourage d'emboutis suivant, de manière sélective, un premier (25) et un deuxième profil (27) de détourage, comprend l'utilisation d'une presse d'emboutissage équipée d'un outillage de détourage (8) ; **caractérisé en ce que**
l'outillage de détourage (8) est conforme à l'une des revendications 1 à 8 ; et par les étapes suivantes :
- mise en place d'un embouti (14) dans l'outillage de détourage (8) ; et, de manière sélective,
- découpe de l'embouti (14) au moyen de la première lame de détourage (22) et de la première arête de découpe (26) de manière à former le premier profil de détourage (25) ; ou
- découpe de l'embouti au moyen de la deuxième lame de détourage (24) et de la deuxième arête de découpe (32) de manière à former le deuxième profil de détourage (27).

10. Procédé de détourage selon la revendication 9, **caractérisé en ce que** la lame mobile (28) du premier bâti est indexée dans une position d'alignement avec la deuxième arête de découpe (32) sur le support (30) avant de réaliser l'étape de découpe de l'embouti (14) suivant le premier profil (25) ; et la deuxième lame de découpe (24) est verrouillée dans une position sortie par rapport à la première lame de découpe (22) avant de réaliser l'étape de découpe de l'embouti suivant le deuxième profil (27).

## Patentansprüche

1. Werkzeug zum Beschneiden (8) eines Pressteils (14), insbesondere einer Kraftfahrzeugkarosserie, wobei das Werkzeug umfasst:
- ein erstes Gehäuse (10) mit einer Haltefläche (12) des Pressteils, wobei die Fläche eine erste Schneidkante (26) umfasst;
- ein zweites Gehäuse (16) mit einem verschiebbaren Druckelement (18), das geeignet ist, das Pressteil gegen die Haltefläche zu drücken, und einem ersten Schneidblatt (22), das in Bezug zum Gehäuse fest und geeignet ist, mit der ersten Schneidkante (26) zusammenzuwirken,
wobei die Haltefläche (12) von einem Träger (30) und einem beweglichen Schneidmesser (28), umfassend die Schneidkante (26), gebildet ist, wobei das Schneidmesser entlang des Trägers (30), der eine zweite Schneidkante (32) umfasst, beweglich ist,
**dadurch gekennzeichnet, dass** es die Verlagerung des Schneidmessers (28) ermöglicht, die zweite Schneidkante (32) freizulegen, und dass das zweite Gehäuse (16) ein zweites Schneidmesser (24) umfasst, das zwischen dem ersten Schneidmesser (22) und dem Druckelement (18) verschiebbar und geeignet ist, mit der zweiten Schneidkante (32) zusammenzuwirken.

2. Werkzeug zum Beschneiden (8) nach Anspruch 1, **dadurch gekennzeichnet, dass** das zweite Gehäuse (16) Mittel zur Verriegelung (38) des zwischen Schneidmessers (24) in einer ausgefahrenen Position in Bezug zum ersten Schneidmesser (22) umfasst, um mit der zweiten Schneidkante (32) zusammenzuwirken.

3. Werkzeug zum Beschneiden (8) nach Anspruch 2, **dadurch gekennzeichnet, dass** das zweite Gehäuse (16) elastische Mittel (42) umfasst, die eine elastische Kraft auf das zweite Schneidmesser (24) ausüben, die dazu neigt, es zu der ausgefahrenen Position in Bezug zum ersten Schneidmesser (22) zu verlagern.

4. Werkzeug zum Beschneiden (8) nach einem der Ansprüche 2 und 3, **dadurch gekennzeichnet, dass** die Verriegelungsmittel (38) des zweiten Gehäuses (16) eingerichtet sind, um eine mechanische, vorzugsweise direkte, Verbindung zwischen den ersten (22) und zweiten (24) Schneidmessern zu gewährleisten, wobei die Mittel vorzugsweise eine Spindel (40) umfassen, die in eine Richtung senkrecht auf jene der Verschiebung des zweiten Schneidmessers (22) senkrecht ist.

5. Werkzeug zum Beschneiden (8) nach einem der Ansprüche 1 bis 4, **dadurch gekennzeichnet, dass** das erste Gehäuse (10) Indexierungsmittel (34) des verschiebbaren Schneidmessers (28) in einer Ausrichtungsposition mit der zweiten Schneidkante (32) auf dem Träger (30) umfasst, so dass das erste Schneidmesser (22) mit der ersten Schneidkante (26) zusammenwirken kann.

6. Werkzeug zum Beschneiden (8) nach Anspruch 5, **dadurch gekennzeichnet, dass** das erste Gehäuse (10) eingerichtet ist, dass das verschiebbare Schneidmesser (28) in eine Richtung entgegengesetzt zum zweiten Gehäuse (16) eingezogen ist, wenn die Indexierungsmittel (34) des ersten Gehäuses inaktiv sind.

7. Werkzeug zum Beschneiden (8) nach einem der Ansprüche 1 bis 6, **dadurch gekennzeichnet, dass** das verschiebbare Schneidmesser (28) des ersten Gehäuses (10) und das zweite Schneidmesser (24) Kontaktflächen (46, 46') mit dem Pressteil aufweisen, die sich aneinander anpassen.

8. Werkzeug zum Beschneiden (8) nach einem der Ansprüche 1 bis 7, **dadurch gekennzeichnet, dass** das verschiebbare Schneidmesser (28) des ersten Gehäuses und das zweite Schneidmesser (24) ausgerichtet sind, um mit einem selben Abschnitt (44) des Pressteils in Kontakt zu kommen.

9. Verfahren zum Beschneiden von Pressteilen selektiv gemäß einem ersten (25) und einem zweiten (27) Beschneidungsprofil, umfassend die Verwendung einer Tiefziehpresse, die mit einem Werkzeug zum Beschneiden (8) ausgestattet ist;
**dadurch gekennzeichnet, dass**
das Werkzeug zum Beschneiden (8) einem der Ansprüche 1 bis 8 entspricht; und durch die folgenden Schritte:
- Anordnen eines Pressteils (14) in dem Werkzeug zum Beschneiden (8); und selektiv
- Schneiden des Pressteils (14) mit Hilfe des ersten Schneidmessers (22) und der ersten Schneidkante (26), um das erste Beschneidungsprofil (25) zu bilden; oder
- Schneiden des Pressteils mit Hilfe des zweiten Schneidmessers (24) und der zweiten Schneidkante (32), um das zweite Beschneidungsprofil (27) zu bilden.

10. Verfahren zum Beschneiden nach Anspruch 9, **dadurch gekennzeichnet, dass** das verschiebbare Schneidmesser (28) des ersten Gehäuses in einer Ausrichtungsposition mit der zweiten Schneidkante (32) auf dem Träger (30) indexiert wird, bevor der Schritt des Schneidens des Pressteils (14) gemäß dem ersten Profil (25) durchgeführt wird; und dass das zweite Schneidmesser (24) in einer ausgefahrenen Position in Bezug zum ersten Schneidmesser (22) verriegelt wird, bevor der Schritt des Schneidens des Pressteils gemäß dem zweiten Profil (27) durchgeführt wird.

## Claims

1. A tool (8) for trimming a press-formed part (14), in particular of the body of a motor vehicle, said tool including:
- a first frame (10) with a surface (12) for supporting the press-formed part, said surface including a first cutting edge (26);
- a second frame (16) with a sliding presser (18) able to press the press-formed part against the support surface, and a first cutting blade (22) which is fixed with respect to said frame and is able to cooperate with the first cutting edge (26),
the support surface (12) being formed by a support (30) and a mobile blade (28) including the first cutting edge (26), said blade being mobile along said support (30) which includes a second cutting edge (32),
**characterized in that** the displacement of said blade (28) permits said second cutting edge (32) to be uncovered and **in that** the second frame (16) includes a second cutting blade (24) sliding between the first blade (22) and the presser (18), and able to cooperate with the second cutting edge (32).

2. The trimming tool (8) according to Claim 1, **characterized in that** the second frame (16) includes locking means (38) of the second cutting blade (24) in an extended position with respect to the first cutting blade (22) with a view to cooperating with the second cutting edge (32).

3. The trimming tool (8) according to Claim 2, **characterized in that** the second frame (16) includes elastic means (42) exerting an elastic force on the second cutting blade (24) tending to displace it towards the extended position with respect to the first cutting blade (22).

4. The trimming tool (8) according to one of Claims 2 and 3, **characterized in that** the locking means (38) of the second frame (16) are configured to ensure a mechanical connection, preferably a direct connection, between the first (22) and second (24) cutting blades, said means preferably including a mobile pin (40) in a direction perpendicular to that of the sliding of the second cutting blade (22).

5. The trimming tool (8) according to one of Claims 1 to 4, **characterized in that** the first frame (10) includes indexing means (34) of the mobile blade (28) in a position of alignment with the second cutting edge (32) on the support (30), such that the first cutting blade (22) can cooperate with the first cutting edge (26) .

6. The trimming tool (8) according to Claim 5, **characterized in that** the first frame (10) is configured so that the mobile blade (28) is set back in a direction opposite to the second frame (16) when the indexing means (34) of said first frame are inactive.

7. The trimming tool (8) according to one of Claims 1 to 6, **characterized in that** the mobile blade (28) of the first frame (10) and the second cutting blade (24) have contact surfaces (46, 46') with the press-formed part which are mated together.

8. The trimming tool (8) according to one of Claims 1 to 7, **characterized in that** the mobile blade (28) of the first frame and the second cutting blade (24) are aligned so as to contact the same portion (44) of the press-formed part.

9. A method for trimming press-formed parts following, in a selective manner, a first (25) and a second (27) trimming profile (27), includes the use of a press-forming press equipped with a trimming tool (8);
**characterized in that**
the trimming tool (8) is in accordance with one of Claims 1 to 8; and by the following steps:
- placing of a press-formed part (14) in the trimming tool (8); and, in a selective manner,
- cutting the press-formed part (14) by means of the first trimming blade (22) and of the first cutting edge (26) so as to form the first trimming profile (25); or
- cutting the press-formed part by means of the second trimming blade (24) and of the second cutting edge (32) so as to form the second trimming profile (27).

10. The trimming method according to Clam 9, **characterized in that** the mobile blade (28) of the first frame is indexed in a position of alignment with the second cutting edge (32) on the support (30) before carrying out the step of cutting the press-formed part (14) following the first profile (25); and the second cutting blade (24) is locked in an extended position with respect to the first cutting blade (22) before carrying out the step of cutting the press-formed part following the second profile (27).
